# EUROPÄISCHE PATENTSCHRIFT

(11) **EP 0 982 186 B1**
(45) Veröffentlichungstag und Bekanntmachung des Hinweises auf die Patenterteilung: **01.12.2004**
(21) Anmeldenummer: 99114902.2
(22) Anmeldetag: 30.07.1999
(51) Int. Cl.: B60N 2/48

(54) **Fahrzeugsitz mit einer Kopfstütze**
Vehicle seat with a headrest
Siège de véhicule avec un appui-tête

(30) Priorität: 26.08.1998 DE 19838721
(43) Veröffentlichungstag der Anmeldung: 01.03.2000
(73) Patentinhaber: GRAMMER AG, 92224 Amberg (DE)
(72) Erfinder: Meyer, Thomas, 92224 Amberg-Raigering (DE)
(74) Vertreter: LOUIS- PÖHLAU- LOHRENTZ

(56) Entgegenhaltungen:
- DE-A- 4 042 034
- DE-A- 19 652 476
- DE-U- 29 723 240
- US-A- 5 927 804

## Beschreibung

Die Erfindung betrifft einen Fahrzeugsitz mit einer Rückenlehne und einer Kopfstütze, die mittels einer Verbindungseinrichtung an der Rückenlehne angebracht ist.

Derartige Fahrzeugsitze sind in einer Vielzahl Ausbildungen bekannt.

Nachdem der Kopf des jeweiligen Sitzbenutzers von der Kopfstütze des Fahrzeugsitzes üblicherweise beabstandet ist, ergibt sich insbes. bei Auffahrgeschwindigkeiten bis ca. 15 km/h die Gefahr eines sog. Halswirbel-Schleudertraumas infolge Scherbeanspruchung der einzelnen Halswirbel. Um ein solches Halswirbel-Schleudertrauma zu vermeiden, wurde bereits vorgeschlagen, in die Kopfstütze des Fahrzeugsitzes ein Airbag-artiges Gebilde zu integrieren, um bei einer Auffahr-Situation im Heckbereich des jeweiligen Fahrzeuges eine Vorverlagerung der Kopfstütze zu erzielen. Eine solche Integration in die Kopfstütze weist jedoch den Mangel auf, daß die Kopfstütze gleichsam nicht mehr autark und somit nicht problemlos von der Rückenlehne des Fahrzeugsitzes entfernbar ist, bzw. daß die Form der Kopfstütze durch die Integration des Airbag entsprechend beeinflußt bzw. beeinträchtigt wird.

Ein oberbegriffmäßiger Fahrzeugsitz ist in dem DE-A-4 042 034 beschriehen.

Der Erfindung liegt in Kenntnis dieser Gegebenheiten die Aufgabe zugrunde, einen Fahrzeugsitz der eingangs genannten Art zu schaffen, bei welchem die Kopfstütze bei einer Auffahr-Situation im Heckbereich des entsprechenden Fahrzeugs mit einfachen Mitteln derartig vorverlagert wird, daß ein Halswirbel-Schleudertrauma des Benutzers des Fahrzeugsitzes zuverlässig verhindert wird, wobei die Kopfstütze autark und somit von der Rückenlehne im Bedarfsfall entfernbar ist.

Die Aufgabe wird durch die kennzeichnenden Merkmale des Anspruchs 1 gelöst.

Diese Aufgabe wird bei einem Fahrzeugsitz der eingangs genannten Art erfindungsgemäß dadurch gelöst, daß an der Rückenlehne eine Verstelleinrichtung beweglich vorgesehen ist, die eine Kulisse aufweist, an welcher die Verbindungseinrichtung der Kopfstütze derartig geführt ist, daß eine Verstellung der Verstelleinrichtung in Querrichtung des Fahrzeugsitzes eine Verstellung der Kopfstütze in Sitzlängsrichtung ergibt, und daß die Verstelleinrichtung zu ihrer Verstellung mit einem federelastischen, mechanisch vorgespannten Antriebselement verbunden ist, das zu seiner Freigabe und Entspannung mit einer fahrzeugeigenen Beschleunigungs-Sensoreinrichtung zusammengeschaltet ist. Die Verstelleinrichtung kann bspw. linear beweglich und an der Rückenlehne vorgesehen sein.

Dadurch, daß die Verstelleinrichtung mit der Kulisse und das federelastische, mechanisch gespannte Antriebselement nach seiner Freigabe und der daraus resultierenden Entspannung zum linearen Verstellen der Verstelleinrichtung vorgesehen sind, ergibt sich der Vorteil, daß die Kopfstütze autark ist und folglich im Bedarfsfall auch von der Rückenlehne des Fahrzeugsitzes entfernt werden kann. Das kann bspw. bei der Montage des Fahrzeugsitzes im zugehörigen Fahrzeug erforderlich sein. Die Kopfstütze des erfindungsgemäßen Fahrzeugsitzes kann manuell oder motorisch in bezug auf die Rückenlehne höhenverstellbar sein. Das Antriebselement zum Verstellen der Verstelleinrichtung in Querrichtung des Fahrzeugsitzes und somit zur Verstellung der Kopfstütze in Sitzlängsrichtung nach vorne kann mindestens ein Federelement aufweisen, das mit einer Arretier- und Auslösevorrichtung verbunden ist, die mit der fahrzeugeigenen Beschleunigungs-Sensoreinrichtung verbunden ist. Bei der fahrzeugeigenen Beschleunigungs-Sensoreinrichtung handelt es sich bspw. um einen sog. Crash-Sensor, wie er bekanntermaßen z.B. bei Gurtstraffern bzw. bei Airbags in Fahrzeugen zum Einsatz gelangt.

Die Arretier- und Auslöseeinrichtung kann eine elektromagnetische Einrichtung aufweisen. Hierbei kann es sich um ein elektromagnetisches Relais oder um eine Relais-Schaltung handeln. Die Arretier- und Auslöseeinrichtung kann auch eine elektromechanische Einrichtung aufweisen. Hierbei kann es sich bspw. um ein Fadenelement aus einem schmelzbaren Material handeln, das von einer Heizwendel umgeben ist. Wird die Heizwendel bei einem Crash aktiviert, d.h. von einem das Fadenelement schmelzenden elektrischen Strom durchflossen, so wird das Fadenelement geschmolzen, so daß das federelastische, mechanisch gespannte Antriebselement sich entspannen und die Verstelleinrichtung verstellen kann.

Während es sich bei diesen Arretier- und Auslöseeinrichtungen um nicht reversible bzw. um nur bedingt reversible Einrichtungen handelt, ist es erfindungsgemäß auch möglich, daß die Arretier- und Auslöseeinrichtung bspw. eine piezokeramische Einrichtung aufweist. Hierbei handelt es sich in vorteilhafter Weise um eine reversible Einrichtung, d.h. um eine Einrichtung, die ohne weiteres wiederholt anwendbar ist.

Bei dem erfindungsgemäßen Fahrzeugsitz kann die Verstelleinrichtung ein Plattenelement aufweisen, das am oberseitigen Endabschnitt der Rückenlehne in deren Querrichtung linear beweglich vorgesehen ist. Die Verbindungseinrichtung kann zwei voneinander beabstandete Stangenelemente aufweisen und das Plattenelement der Verstelleinrichtung kann mit zwei voneinander getrennten, die Kulisse bildenden Kulissenschlitzen ausgebildet sein, durch welche sich die beiden Stangenelemente hindurcherstrecken. Durch geeignete Gestaltung der beiden Kulissenschlitze ist eine einfache Auslegung der Kinematik, d.h. des Verlagerungsweges der Kopfstütze nach vorne sowie der Geschwindigkeit bzw. der Beschleunigung der Verlagerungsbewegung, d.h. ihrer "Aggressivität" problemlos möglich.

Die Kulissenschlitze können einen aktiven Verstellendabschnitt mit einer zum Festlegen der vorverlagerten Stangenelemente mit der Kopfstütze vorgesehenen Rastung aufweisen. Durch eine solche Ausbildung ergibt sich der Vorteil, daß die vorverlagerte Kopfstütze in der vorverlagerten Position fixiert wird, was unter Sicherheits-Gesichtspunkten bevorzugt ist.

Um ungewollte, begrenzte Bewegungen der Verstelleinrichtung in ihrer inaktiven, d.h. nicht durch das federelastische, mechanisch gespannte Antriebselement ausgelösten aktiven Position zu verhindern, kann das Plattenelement mittels eines Halteelementes in seiner normalen Inaktiv-Position festgehalten werden. Dieses Halteelement kann bspw. von einem Scher-Zapfen gebildet sein, der sich in ein Loch im Plattenelement hineinerstreckt. Wird das Plattenelement mit Hilfe des Antriebselementes beschleunigt, um die Kopfstütze in Sitzlängsrichtung nach vorne zu verlagern, so wird das vom Scher-Zapfen gebildete Halteelement abgeschert und das Plattenelement wie beschrieben linear bewegt. Um das Abscheren des Scher-Zapfens zu erleichtern bzw. ein definiertes Abscher-Verhalten zu erzielen, kann der Scher-Zapfen bspw. mit einer Soll-Schwachstelle ausgebildet sein. Demselben Zwecke kann es dienlich sein, wenn das Loch im Plattenelement mit einer Scher-Kante ausgebildet ist.

Bei dem erfindungsgemäßen Fahrzeugsitz hat es sich als zweckmäßig erwiesen, wenn das federelastische, mechanisch gespannte Antriebselement zur Aktivierung innerhalb eines Zeitabschnittes von maximal ca. 50 bis 60 msec bei einer Auffahrgeschwindigkeit des Fahrzeugs bis ca. 15 km/h vorgesehen ist. Das ist mit einem federelastischen Antriebselement mit wenigstens einem Federelement geeigneter Federkonstante ohne weiteres realisierbar.

Aus Unfallanalysen, Schlittenversuchen mit sog. Dummy's bzw. aus realen Kollisionen ist es bekannt, daß eine Kopfstütze innerhalb des zuletzt genannten Zeitabschnittes von maximal ca. 50 bis 60 msec bei einer Auffahrgeschwindigkeit von bis zu ca. 15 km/h aktiviert werden muß, um optimal wirksam zu sein. Bei der Aktivierung des federelastischen Antriebselementes wird die Verstelleinrichtung linear in Sitzquerrichtung verstellt. Dabei wird mit Hilfe der Kulisse die Kopfstütze in Sitzlängsrichtung nach vorne bewegt. In ihrer vorderen Endposition kann die Kopfstütze dann durch die Rastung der Kulisse fixiert sein.

Der erfindungsgemäße Fahrzeugsitz weist den erheblichen Vorteil auf, daß die übliche Problematik der sog. "Out-Of-Position", wie sie z.B. durch eine Anlage eines Kopfes an der Kopfstütze gegeben ist, durch die relativ kleinen Verschiebe-Geschwindigkeiten und durch eine geeignete "Sloop-Kurve" des federelastischen Antriebselementes eliminiert ist. Bei der Anlage des Kopfes des Sitzbenutzers an der Kopfstütze während der normalen Fahrt würde sich nämlich eine entsprechende Vergrößerung der Masseträgheiten um ca. das Dreifache ergeben, so daß die Feder-Leistung des Antriebselementes nicht mehr ausreichen würde, um diese erhöhten Massen, d.h. die Summe aus der Masse der Kopfstütze und der Masse des Kopfes des Sitzbenutzers, verletzungstypisch zu beschleunigen.

Bei dem erfindungsgemäßen Fahrzeugsitz ist die Anzahl der Bauteile bzw. Komponenten auf ein Minimum reduziert, die sich entlang einfacher Bewegungsbahnen bewegen. Der Verlauf der Kulisse der Verstelleinrichtung des erfindungsgemäßen Fahrzeugsitzes ist auf die verschiedenen möglichen Anforderungen wie bspw. den Verlagerungsweg der Kopfstütze nach vorne und die "Aggressivität" der Verlagerung in einfacher Weise auslegbar, wie bereits erwähnt worden ist. Weitere bereits erwähnte Vorteile bestehen darin, daß das Antriebselement in der Rückenlehne vorgesehen ist, so daß bei einer Fehlauslösung oder bei einer Beschädigung des Antriebselementes für den Sitzbenutzer keine direkte Gefahr besteht. Das Antriebselement bildet gleichsam ein geschlossenes System, was unter Montagegesichtspunkten vorteilhaft ist. Wie ebenfalls bereits erwähnt worden ist, ist bei dem erfindungsgemäßen Fahrzeugsitz die Kopfstüzte autark und folglich im Bedarfsfall auch von der Rückenlehne des Fahrzeugsitzes entfernbar. Einschränkende Vorgaben an die Form bzw. Gestalt der Kopfstütze gibt es erfindungsgemäß nicht. Die Kopfstütze des erfindungsgemäßen Fahrzeugsitzes kann auch wunschgemäß in der Höhe verstellbar sein. Bei dieser Höheneinstellung kann es sich um eine manuelle oder um eine automatische Höheneinstellung handeln. Letztere bildet einen wichtigen Sicherheits-Zugewinn.

Weitere Einzelheiten, Merkmale und Vorteile ergeben sich aus der nachfolgenden Beschreibung eines in der Zeichnung schematisch dargestellten Ausführungsbeispieles des erfindungsgemäßen Fahrzeugsitzes bzw. wesentlicher Teile desselben. Es zeigen:
- Fig. 1: teilweise aufgeschnitten einen Fahrzeugsitz in einer Seitenansicht,
- Fig. 2: einen Schnitt entlang der Schnittlinie II-II in Fig. 1 in einem größeren Maßstab,
- Fig. 3: einen Schnitt entlang der Schnittlinie III-III in Fig. 2 in einem weiter vergrößerten Maßstab, und
- Fig. 4: ein Detail gemäß Fig. 3 zur Verdeutlichung der mit dem federelastischen, mechanisch gespannten Antriebselement kombinierten Arretier- und Auslöseeinrichtung.

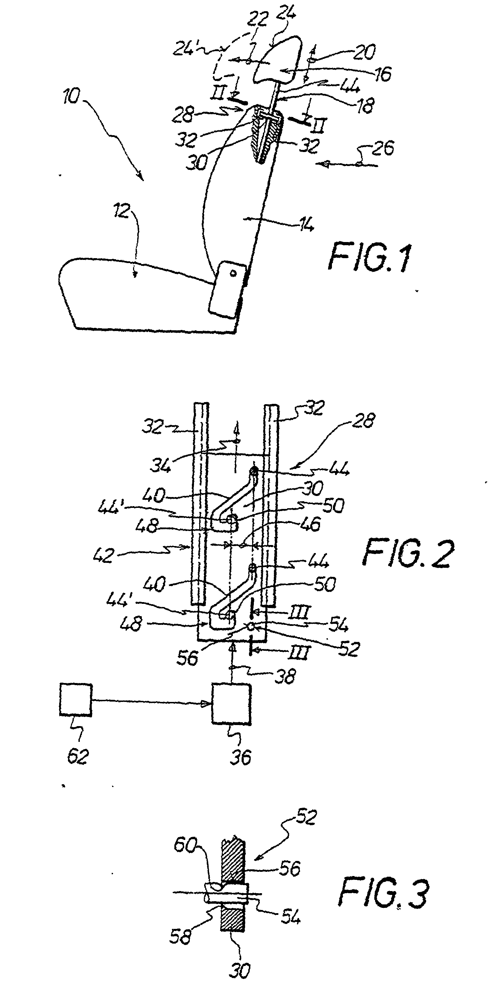

Fig. 1 zeigt einen Fahrzeugsitz 10 mit einem Sitzteil 12, von welchem eine Rückenlehne 14 nach oben steht, die teilweise aufgeschnitten gezeichnet ist. An der Rückenlehne 14 ist eine Kopfstütze 16 vorgesehen, die mittels einer Verbindungseinrichtung 18 an der Rückenlehne angebracht ist. Die Kopfstütze 16 ist an der Rückenlehne 14 vorzugsweise höhenverstellbar angebracht. Diese Höhenverstellbarkeit ist durch den Doppelpfeil 20 angedeutet. Die Kopfstütze 16 ist außerdem in Sitzlängsrichtung nach vorne verstellbar. Das ist durch den Pfeil 22 angedeutet. Die Kopfstütze 16 bzw. deren Vorderkontur 24 ist mit einer dünnen strichlierten Linie 24' in ihrer nach vorne verlagerten Position verdeutlicht. Diese Verlagerung der Kopfstütze 16 nach vorne erfolgt, wenn eine durch den Pfeil 26 angedeutete Fahrzeug-Auffahr-Situation gegeben ist.

Wie auch aus Fig. 2 ersichtlich ist, ist an der Rückenlehne 14 eine Verstelleinrichtung 28 vorgesehen, die ein Plattenelement 30 aufweist. Das Plattenelement 30 ist an einer Führungseinrichtung 32 in Querrichtung des Fahrzeugsitzes linear verstellbar vorgesehen. Das ist in Fig. 2 durch den Pfeil 34 angedeutet. Zur linearen Verstellung des Plattenelementes 30 der Verstelleinrichtung 28 ist ein federelsatisches, mechanisch gespanntes Antriebselement 36 vorgesehen, das in Fig. 2 durch einen Block schematisch angedeutet ist. Die Wirkverbindung des Antriebselementes 36 mit dem Plattenelement 30 der Verstelleinrichtung 28 ist in Fig. 2 durch die Pfeillinie 38 verdeutlicht.

Das Plattenelement 30 der Verstelleinrichtung 28 ist mit zwei konformen Kulissenschlitzen 40 ausgebildet, die eine Kulisse 42 der Verstelleinrichtung 28 bilden. Die Verbindungseinrichtung 18 zur Verbindung der Kopfstütze 16 mit der Rückenlehne 14 weist zwei voneinander beabstandete Stangenelemente 44 auf, die sich durch die Kulissenschlitze 40 im Plattenelement 30 der Verstelleinrichtung 28 hindurcherstrecken. In Fig. 2 sind die beiden Stangenelemente 44 der Verbindungseinrichtung 18 (sh. Fig.1) mit durchgezogenen Linien schraffiert in ihrer normalen Inaktiv-Position und mit dünnen strichlierten Linien als Stangenelemente 44' - nach einer entsprechenden Aktivierung des Antriebselementes 36 - in ihrer aktiven, d.h. vorverlagerten Kopfstützen-Position zeichnerisch dargestellt, wie sie in Fig. 1 durch die vorverlagerte Vorderkontur 24' der Kopfstütze 16 angedeutet ist. Entsprechend der Gestalt bzw. des Kurvenverlaufes der Kulissenschlitze 40 ergibt sich ein bestimmter Vorverlagerungsweg der Kopfstütze 16, der in Fig. 2 durch die Pfeillinie 46 verdeutlicht ist. Der Kurvenverlauf der Kulissenschlitze 40 ergibt auch eine gewünschte "Aggresivität" der Kopfstützenvorverlagerung in Sitzlängsrichtung, wie sie in Fig. 1 durch den Pfeil 22 angedeutet ist.

Um die Kopfstütze 16 in der vorverlagerten Position entsprechend der Vorderkontur 24' gemäß Fig.1 zu fixieren, weisen die Kulissenschlitze 40 jeweils einen aktiven Verstellendabschnitt 48 auf, der mit einer Rastung 50 ausgebildet ist.

Um das Plattenelement 30 der Verstelleinrichtung 28 in seiner normalen Inaktiv-Position festzuhalten und Rüttelbewegungen o.dgl. des Plattenelementes 30 zu verhindern, kann ein Halteelement 52 vorgesehen sein.

Dieses Halteelement 52 kann von einem in Fig. 3 abschnittweise gezeichneten Scher-Zapfen 54 gebildet sein, der sich in ein Loch 56 im Plattenelement 30 der Verstelleinrichtung 28 hineinerstreckt. Das Loch 56 im Plattenelement 30 kann mit einer Scher-Kante 58 und der Scher-Zapfen 54 kann mit einer definierten Schwachstelle 60 ausgebildet sein, um bei einer Aktivierung, d.h. bei einer Freigabe und Entspannung des federelastischen, mechanisch gespannten Antriebselementes 36 das Abscheren des Scher-Zapfens 54 zu erleichtern. Die Aktivierung, d.h. die Freigabe und mechanische Entspannung des federelastischen, mechanisch gespannten Antriebselementes (sh. Fig. 2) erfolgt mit Hilfe einer fahrzeugeigenen Beschleunigungs-Sensoreinrichtung 62, die in Fig. 2 - wie das federelastische Antriebselement 36 - durch einen Block schematisch verdeutlicht ist.

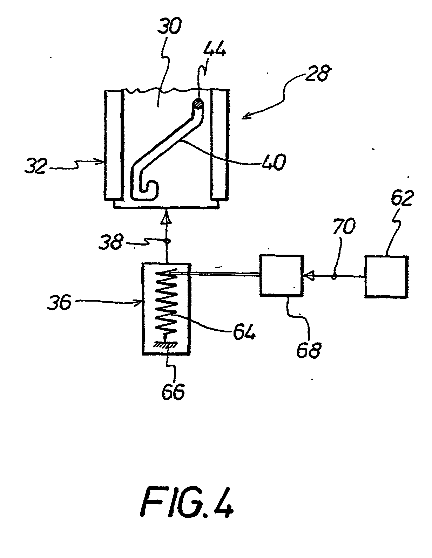

Fig. 4 zeigt abschnittweise die Verstelleinrichtung 28 (sh. auch Fig. 2) mit dem Plattenelement 30, das entlang einer Führungseinrichtung 32 linear beweglich geführt ist. Das Plattenelement 30 der Verstelleinrichtung 28 ist mit einem federelastischen, mechanisch gespannten Antriebselement 36 wirkverbunden. Diese Wirkverbindung ist durch den Pfeil 38 verdeutlicht.

Das Plattenelement 30 ist mit Kulissenschlitzen 40 ausgebildet (sh. Fig. 2), von welchen in Fig. 4 nur einer zeichnerisch dargestellt ist. Durch den jeweiligen Kulissenschlitz 44 erstreckt sich ein Stangenelement 44 hindurch.

Das federeleastische, mechanisch gespannte Antriebselement 36 weist mindestens ein Federelement 64 auf, das einen Endes ortsfest vorgesehen ist, was durch die Bezugsziffer 66 angedeutet ist. Am davon entfernten Ende des mechanisch gespannten Federelementes 64 des federelastischen Antriebselementes 36 ist eine Arretier- und Auslöseeinrichtung 68 vorgesehen, mit deren Hilfe das mindestens eine Federelement 64 des federelastischen Antriebselementes 36 im mechanisch gespannten Betriebszustand festgehalten wird. Die Arretier- und Auslöseeinrichtung 68, bei der es sich z.B. um eine elektromechanische, um eine elektromagnetische oder um eine piezokeramische Einrichtung handeln kann, ist mit der fahrzeugeigenen Beschleunigungs-Sensoreinrichtung 62 wirkverbunden. Diese Wirkverbindung ist durch den Pfeil 70 angedeutet. Stellt die Sensoreinrichtung 62 einen Crash fest, so wird die Arretier- und Auslöseeinrichtung in der Weise aktiviert, daß sich das mindestens eine mechanisch gespannte Federelement 64 des federelastischen Antriebselementes 36 entspannen kann. Hierdurch wird das Plattenelement 30 entlang der Führungseinrichtung 32 und somit jedes Stangenelement 44 entlang des zugehörigen Kulissenschlitzes 40 verstellt.

## Patentansprüche

1. Fahrzeugsitz mit einer Rückenlehne (14) und einer Kopfstütze (16), die mittels einer Verbindungseinrichtung (18) an der Rückenlehne (14) angebracht ist,
**dadurch gekennzeichnet,**
**daß** an der Rückenlehne (14) eine Verstelleinrichtung (28) vorgesehen ist, die ein Plattenelement (30) aufweist, das am oberseitigen Endabschnitt der Rückenlehne (14) in deren Querrichtung linear beweglich angeordnet ist und die eine Kulisse (42) aufweist, an welcher die Verbindungseinrichtung (18) der Kopfstütze (16) derartig geführt ist, daß eine Verstellung der Verstelleinrichtung (28) in Querrichtung des Fahrzeugsitzes (10) eine Verstellung der Kopfstütze (16) in Sitzlängsrichtung nach vorne ergibt, und
**daß** die Verstelleinrichtung (28) zu ihrer Verstellung mit einem federelastischen, mechanisch gespannten Antriebselement (36) verbunden ist, das zu seiner Freigabe und Entspannung mit einer fahrzeugeigenen Beschleunigungs-Sensoreinrichtung (62) zusammengeschaltet ist.

2. Fahrzeugsitz nach Anspruch 1,
**dadurch gekennzeichnet,**
**daß** die Verbindungseinrichtung (18) zwei voneinander beabstandete Stangenelemente (44) aufweist, und daß das Plattenelement (30) der Verstelleinrichtung (28) mit zwei voneinander getrennten, die Kulisse (42) bildenden Kulissenschlitzen (40) ausgebildet ist, durch welche sich die beiden Stangenelemente (44) hindurcherstrecken.

3. Fahrzeugsitz nach Anspruch 2,
**dadurch gekennzeichnet,**
**daß** die Kulissenschlitze (40) einen aktiven Verstellendabschnitt (48) mit einer zum Festlegen der vorverlagerten Stangenelemente (44) mit der Kopfstütze (16) vorgesehenen Rastung (50) aufweisen.

4. Fahrzeugsitz nach Anspruch 1,
**dadurch gekennzeichnet,**
**daß** das Plattenelement (30) mittels eines Halteelementes (52) in seiner normalen Inaktiv-Position festgehalten wird.

5. Fahrzeugsitz nach Anspruch 4,
**dadurch gekennzeichnet,**
**daß** das Halteelement (52) von einem Scher-Zapfen (54) gebildet ist, der sich in ein Loch (56) im Plattenelement (30) hineinerstreckt.

6. Fahrzeugsitz nach Anspruch 1,
**dadurch gekennzeichnet,**
**daß** das federelastische, mechanisch gespannte Antriebselement (36) zur Aktivierung innerhalb eines Zeitabschnittes von maximal ca. 50 bis 60 msec bei einer Auffahrgeschwindigkeit des Fahrzeugs bis ca. 15 km/h vorgesehen ist.

7. Fahrzeugsitz nach einem der Ansprüche 1 bis 6,
**dadurch gekennzeichnet,**
**daß** das federelastische, mechanisch gespannte Antriebselement (36) mindestens ein Federelement (64) aufweist, das mit einer Arretier- und Auslöseeinrichtung (68) verbunden ist, die mit der fahrzeugeigenen Beschleunigungs-Sensoreinrichtung (62) verbunden ist.

8. Fahrzeugsitz nach Anspruch 7,
**dadurch gekennzeichnet,**
**daß** die Arretier- und Auslöseeinrichtung (68) eine elektromechanische Einrichtung ist.

9. Fahrzeugsitz nach Anspruch 7,
**dadurch gekennzeichnet,**
**daß** die Arretier- und Auslöseeinrichtung (68) eine elektromagnetische Einrichtung ist.

10. Fahrzeugsitz nach Anspruch 7,
**dadurch gekennzeichnet,**
**daß** die Arretier- und Auslöseeinrichtung (68) eine piezokeramische Einrichtung ist.

## Claims

1. Vehicle seat having a backrest (14) and a head restraint (16), which is attached to the backrest (14) by means of a connecting device (18), **characterized in that** an adjusting device (28) is provided on the backrest (14), the adjusting device having a plate element (30), which is arranged on the upper end section of the backrest (14) in a manner such that it can move linearly in the transverse direction thereof, and having a slotted guide (42) on which the connecting device (18) of the head restraint (16) is guided in such a manner that an adjustment of the adjusting device (28) in the transverse direction of the vehicle seat (10) produces an adjustment of the head restraint (16) forwards in the longitudinal direction of the seat, and **in that**, for its adjustment, the adjusting device (28) is connected to a spring-elastic, mechanically tensioned driving element (36) which is connected, for its release and relaxation of tension, to the vehicle's own acceleration sensor device (62).

2. Vehicle seat according to Claim 1, **characterized in that** the connecting device (18) has two rod elements (44) which are spaced apart from each other, and **in that** the plate element (30) of the adjusting device (28) is formed with two guide slots (40) which are separated from each other, form the slotted guide (42) and through which the two rod elements (44) extend.

3. Vehicle seat according to Claim 2, **characterized in that** the guide slots (40) have an active adjusting end section (48) with a latching section (50) provided for securing the rod elements (44), which are displaced forwards, to the head restraint (16).

4. Vehicle seat according to Claim 1, **characterized in that** the plate element (30) is retained in its normal inactive position by means of a retaining element (52).

5. Vehicle seat according to Claim 4, **characterized in that** the retaining element (52) is formed by a shearing pin (54) which extends into a hole (56) in the plate element (30).

6. Vehicle seat according to Claim 1, **characterized in that** the spring-elastic, mechanically tensioned driving element (36) is provided for activation within a period of time of at maximum approximately 50 to 60 msec at a collision speed of the vehicle of up to approximately 15 km/h.

7. Vehicle seat according to one of Claims 1 to 6, **characterized in that** the spring-elastic, mechanically tensioned driving element (36) has at least one spring element (64) which is connected to a locking and release device (68) which is connected to the vehicle's own acceleration sensor device (62).

8. Vehicle seat according to Claim 7, **characterized in that** the locking and release device (68) is an electromechanical device.

9. Vehicle seat according to Claim 7, **characterized in that** the locking and release device (68) is an electromagnetic device.

10. Vehicle seat according to Claim 7, **characterized in that** the locking and release device (68) is a piezoceramic device.

## Revendications

1. Siège pour véhicule, du type comprenant un dossier (14) et un appuie-tête (16) monté sur le dossier (14) par l'intermédiaire d'un système de liaison (18),
**caractérisé en ce que**, sur le dossier (14) est prévu un système à coulissement (28), qui présente un élément en forme de plaquette (30), qui est monté sur la section terminale supérieure du dossier (14), mobile linéairement dans la direction transversale de celui-ci, et qui présente une coulisse (42) sur laquelle le système de liaison (18) de l'appuie-tête (16) est guidé d'une manière telle qu'un coulissement du système à coulissement (28) dans la direction transversale du siège pour véhicule (10) détermine un déplacement vers l'avant de l'appuie-tête (16), dans la direction longitudinale du siège et **en ce que** le système à coulissement (28) est réuni, en vue de son coulissement, avec un élément d'actionnement élastique tendu mécaniquement (36) qui, en vue de sa libération et de sa détente, est couplé en même temps à un système de détection d'accélération (62) propre au véhicule.

2. Siège pour véhicule selon la revendication 1, **caractérisé en ce que** le système de liaison (18) présente deux éléments en forme de tiges (44) écartés l'un de l'autre, et **en ce que** l'élément en forme de plaquette (30) du système à coulissement (28) comporte deux fentes de coulissement (40) écartées l'une de l'autre et qui forment la coulisse (42), à travers lesquelles s'étendent les deux éléments en forme de tiges (44).

3. Siège pour véhicule selon la revendication 2, **caractérisé en ce que** les fentes de coulissement (40) présentent une section terminale de coulissement actif (48), avec un arrêtoir (50), prévue pour l'immobilisation des éléments de tiges déplacés vers l'avant avec l'appuie-tête (10).

4. Siège pour véhicule selon la revendication 1, **caractérisé en ce que** l'élément en forme de plaquette (30) est immobilisé au moyen d'un élément de maintien (52) dans sa position normale inactive.

5. Siège pour véhicule selon la revendication 4, **caractérisé en ce que** l'élément de maintien (52) est constitué par une cheville à cisaillement (54), qui s'enfonce dans un trou (56) de l'élément en forme de plaquette (30).

6. Siège pour véhicule selon la revendication 1, **caractérisé en ce que** l'élément d'actionnement élastique tendu mécaniquement (36) est prévu pour s'activer en un intervalle de temps maximal d'environ 50 à environ 60 m/sec, pour une vitesse d'accélération subite du véhicule d'environ 15 km/h.

7. Siège pour véhicule selon l'une quelconque des revendications 1 à 6, **caractérisé en ce que** l'élément d'actionnement élastique tendu mécaniquement (36) présente au moins un élément élastique (64) qui est réuni à un système d'arrêt et de dégagement (68) qui est lui-même en liaison avec le système de détection d'accélération (62) propre au véhicule.

8. Siège pour véhicule selon la revendication 7, **caractérisé en ce que** le système d'arrêt et de dégagement (68) est un système électromécanique.

9. Siège pour véhicule selon la revendication 7, **caractérisé en ce que** le système d'arrêt et de dégagement (68) est un système électromagnétique.

10. Siège pour véhicule selon la revendication 7, **caractérisé en ce que** le système d'arrêt et de dégagement (68) est un système piézo-céramique
